# EUROPÄISCHE PATENTANMELDUNG

(11) **EP 2 767 480 A1**
(43) Veröffentlichungstag der Anmeldung: **20.08.2014**
(21) Anmeldenummer: 14000503.4
(22) Anmeldetag: 12.02.2014
(51) Int. Cl.: B65D 5/50, A01G 5/06, B65D 85/50

(54) **Hydroblumengebinde-Einheit mit Container und Verfahren dazu**

(30) Priorität: 16.02.2013 DE 202013001529 U; 29.10.2013 DE 102013017913
(71) Anmelder: Bergmann, Uwe, 74564 Crailsheim (DE)
(72) Erfinder: Bergmann, Uwe, 74564 Crailsheim (DE)

(57) **Zusammenfassung**

Die Erfindung betrifft einen kombinierten Container für eine Hydroblumengebinde-Einheit, bestehend aus mindestens einem Blumengebinde, einem Schutzgehäuse und je Blumengebinde einem als Wasserreservoir dienenden wasserdichten Behältnis mit einem Nassfließ oder einem sonstigen, Flüssigkeit speichernden Element, wobei das bzw. die Blumengebinde jeweils von einem wasserdichten Behältnis auf der unteren Stilseite umfasst wird bzw. werden, dadurch gekennzeichnet, dass das oder die Blumengebinde im Wesentlichen senkrecht in dem Schutzgehäuse fixiert wird bzw. werden. Ebenso betrifft es ein Verfahren zur Vorbereitung und Endmontage eines solchen Containers und einer daraus hergestellten Hydroblumengebinde-Einheit, dadurch gekennzeichnet, dass ein oder mehrere Blumengebinde in jeweils ein wasserdichtes und mit Wasser oder einem mit Wasser getränktem Nassfließ gefülltem Behältnis gegeben wird bzw. werden und dann von oben mit dem Bereich der Pflanzenstile in einen Schutzbehälter gesteckt wird bzw. werden.

## Beschreibung

Die Erfindung betrifft einen kombinierten Container für eine Hydroblumengebinde-Einheit zum Vermarkten im Großhandel und Versandhandel mit den Merkmalen aus dem Oberbegriff aus Anspruch 1. Ebenso betrifft es ein Verfahren zur Vorbereitung und Endmontage eines solchen Containers und einer daraus hergestellten Hydroblumengebinde-Einheit.

Bekannt sind aus der AT402361B halm- oder stengelartige Träger, welche Nährstoffe enthalten und in einen Blumenstrauß mit eingebunden werden können.

Weiter sind aus der DE20103052U1 Schutzvorrichtungen für Blumensträuße bekannt, welche ein Feuchtigkeit speicherndes Material enthalten und schnelles Austrocknen verhindern und die Hände vor unangenehmer Feuchtigkeit und Verletzungen schützen sollen.

Aus der WO1993015979A1 sind Transportvasen für Schnittblumen bekannt, welche auf ihrer Innenseite mit einem flüssigkeitsspeichernden, saugfähigen Material ausgestattet sind.

Aus der US8250805B2 sind flexible Dichtbehältnisse für Blumen bekannt, welche mittels Verengungen in mehrere Zonen unterschiedlicher Feuchtigkeit unterteilt sind.

Alle genannten Vorrichtungen haben den Nachteil, dass sie nicht gleichzeitig als kostengünstige, selbst stehende Repräsentationseinheit dienen oder nur bedingt für den einfachen und sicheren Heimtransport des Endkunden oder zur Überbringung vom Florist zum Endkunden taugen.

Der Kunde möchte einerseits eine frisch zubereitete Blumengebinde-Einheit haben, aber andererseits nicht lange darauf warten, insbesondere an der Verkaufstheke eines Blumengeschäfts. Und wenn dann die Container zur Fertig-Montage der Hydroblumengebinde-Einheit vorbereitet bereitgestellt würden, um die Wartezeit der Kunden zu reduzieren, würden sie viel Platz im Verkaufsraum wegnehmen.

Der Erfindung liegt die Aufgabe zugrunde, einen einfach montierbaren bzw. bereitstellbaren Container für eine Hydroblumengebinde-Einheit bereitzustellen. Für den Verkäufer von Blumengebinden bietet sich der Vorteil der raumsparenden Lagerung, des einfachen Transports, der schnellen Montage und der kundenspezifischen Dekoration. Der Hauptvorteil jedoch ist, dass er in kürzester Zeit in der Lage ist, aus, in der Regel frisch geschnittenen und damit frischen, lange haltbaren Pflanzen - bevorzugt Schnittblumen - eine Hydroblumengebinde-Einheit zum direkten Verkauf bzw. Versand an Kunden herzustellen, welche auch repräsentativ aussieht und leicht und ohne Tropfwasser zu transportieren ist. Somit liegt der Erfindung auch die Aufgabe zugrunde, eine Hydroblumengebinde-Einheit und ein Verfahren zur einfachen Herstellung derselben bereitzustellen, dass die genannten Nachteile vermieden werden und obendrein das Handling rundum vereinfacht wird.

Die erfindungsgemäße Lösung ist durch die Merkmale der Ansprüche 1, 7, 11 und 12 charakterisiert. Vorteilhafte Ausgestaltungen sind in den Unteransprüchen wiedergegeben.

Erfindungsgemäß wird das Blumengebinde floristisch zusammengebunden und die Stile fest verschnürt. Danach wird das Blumengebinde mit der unteren Stilseite in ein mit Wasser gefülltes und als Wasserreservoir dienendes Behältnis verbracht, welches nach oben hin verschließbar ist bzw. durch die Pflanzenstile bzw. die unteren Blätter verschlossen wird. Das Wasser kann mit Düngemittel, sonstigen Mitteln zur Verlängerung der Haltbarkeit der Pflanzen bzw. des Wassers oder zur Verschönerung der Blüten bzw. Pflanzen versetzt sein. Ebenso kann sich auch ein mit dem beschriebenen Wasser getränkter Nassfließ oder beides (Wasser und Nassfließ) in dem Behältnis befinden. Selbstverständlich kann das Behältnis aus allen gängigen wasserdichten, steifen oder verformbaren Werkstoffen hergestellt sein, oder bevorzugt einfach eine handelsübliche Kunststofftüte sein. Weiter kann dem Wasser ein Verdickungsmittel beigesetzt sein, welches es galertartig werden lässt und somit eine bessere Haftung an den Pflanzenstilen ermöglicht und ein Auslaufen erschwert.

Diese Einheit aus Blumengebinde und Wasserreservoir wird in einer im Wesentlichen senkrechten Lage in einem Schutzgehäuse fixiert. Das Schutzgehäuse kann bevorzugt ein entsprechend geformter oder gefalteter Karton sein. Ebenso kann es aber auch ein Formteil aus gängigen, leichtgewichtigen und kostengünstigen Werkstoffen wie Styropor oder Papiergrundstoff sein. Wichtig dabei ist, dass das Schutzgehäuse einen sicheren Stand gewährleistet. Ein weiterer Gesichtspunkt ist dessen kostengünstige Herstellung bzw. der Rationalisierungseffekt bei mittleren und höheren Stückzahlen.

Die obere Fixieröffnung für das bzw. die Blumengebinde können einfache ausgeschnittene Flächen oder eingeschnittene und umgebogene Lappen sein. Sofern das aus Karton gefaltete Schutzgehäuse eine Bodenfläche aufweist, kann diese eben oder nach oben eingezogen sein, damit die Hydroblumengebinde-Einheit einen definierten, sicheren Stand hat und nicht wackelt.

Der Boden und/oder der Deckel kann als sogenannter Automatikboden - weitere Bezeichnungen sind Geklebter Faltboden, Klebefaltboden, Selbstverschlussboden, Blitzboden oder Aufrichteboden-ausgeführt sein.

In einer besonders bevorzugten Ausführungsform besteht das Schutzgehäuse aus einem unbedruckten, zugeschnittenen, vorgefalzten und an den erforderlichen Stellen verklebten Karton, welcher kostengünstig, recycelbar und leicht ist, raumsparend gelagert werden kann und bei Bedarf rasch entsprechend aufgefaltet werden kann. Der Boden ist als Automatikboden ausgeführt. Der Deckel hat eine runde Aussparung, welche radial nach außen geschlitzt ausgeführt ist. Die beiden seitlichen Laschen haben jeweils eine Länge von ca. 50% der Behälterbreite, so dass sie stützend auf das eingesteckte Blumengebinde wirken.

Die Größe des Schutzgehäuses wird entsprechend den spezifischen Gegebenheiten gewählt. Die Höhe soll mindestens der Höhe des als Wasserreservoir dienenden Behältnisses bzw. der Länge der Stile des Blumengebindes entsprechen. Die horizontale Ausdehnung bestimmt den Mindestabstand der aneinander gereihten Hydroblumengebinde-Einheiten.

Das Schutzgehäuse dient auch der Präsentation der Hydroblumengebinde-Einheit und kann in Farbe, Form und floristischer Dekoration die Schönheit des Blumengebindes unterstreichen. Ebenso kann die Oberfläche mittels Schriftzüge und die Form mittels Bezug zum Corporate Identity als Werbeträger genutzt werden.

Um eine größere Flexibilität bezüglich der Gestaltung der Oberfläche zu haben kann eine Banderole um das Schutzgehäuse oder auch verschiedene Etiketten angebracht oder übergestülpt werden.

Ergänzend kann das Blumengebinde bzw. der obere Teil des Blumengebindes in eine repräsentative, zumindest lichtdurchlässige, bevorzugt zumindest teilweise transparente Schutzfolie gehüllt sein. Dies dient einerseits dem Aussehen der Hydroblumengebinde-Einheit, aber auch als Schutz vor Kälte und Zugluft. Weiter erleichtert sie das Handling und schützt die Pflanzen vor Schmutz der Umgebung, aber auch die Umgebung vor Blütenstaub und Pflanzensäften.

Die beschriebene Schutzfolie kann aber auch die gesamte Hydroblumengebinde-Einheit umfassen und ggf. am Schutzgehäuse befestigt sein. Die Befestigung der Folie am Schutzgehäuse kann ebenso wie die Befestigung der Biegelaschen am Schutzgehäuse mittels manueller Klebung, aber auch mittels Klammer-Elementen oder mittels Selbstklebeelementen erfolgen.

Die erfindungsgemäße Lösung ist nachfolgend anhand von Figuren näher erläutert. Darin ist im Einzelnen folgendes dargestellt:

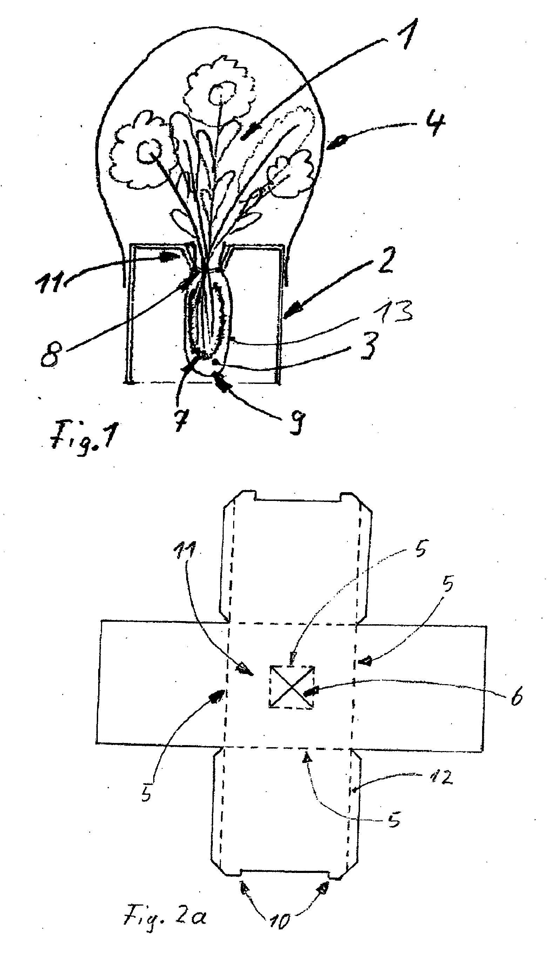

Fig. 1 verdeutlicht in schematisch vereinfachter Schnitt-Darstellung den Grundaufbau einer erfindungsgemäß gestalteten Hydroblumengebinde-Einheit.

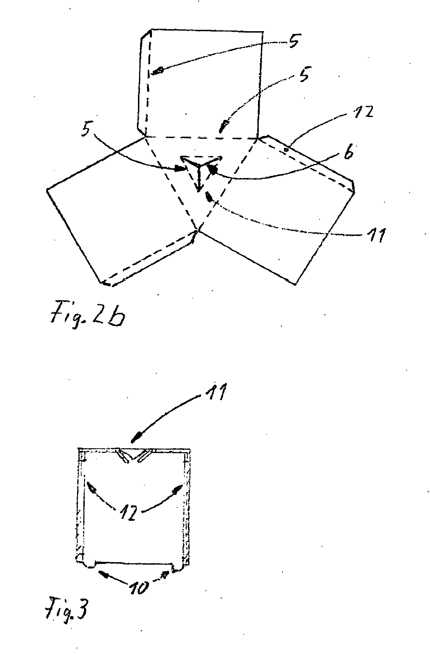

Fig. 2a und 2b zeigen beispielhaft die Karton-Zuschnitte eines vierkantigen und dreikantigen Schutzgehäuses. In Fig. 2a sind die Wandfortsätze erkennbar, welche im zusammengefalteten Zustand die Standbeine ergeben.
Fig. 3 zeigt einen Schnitt durch den Kartonzuschnitt aus Fig. 2a im zusammengefalteten Zustand.

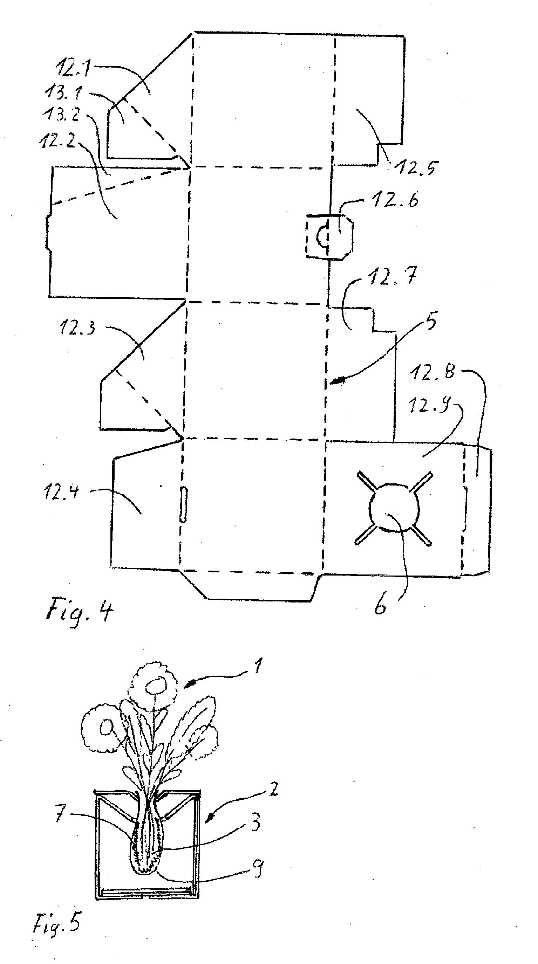

Fig. 4 zeigt beispielhaft ein Schnittmuster für einen Karton für einen bevorzugten Container. Die durchgezogenen Linien zeigen die Schnittlinien und die gestrichelten Linien die Biegelinien, welche vorgebogen oder vorgedrückt werden, so dass dort saubere Biegekanten entstehen können. Aus den Biegelaschen 12.1 bis 12.4 entsteht der Automatikboden und aus den Biegelaschen 12.5 bis 12.9 entsteht der Deckel.
Fig. 5 verdeutlicht in schematisch vereinfachter Schnitt-Darstellung den Grundaufbau einer erfindungsgemäß gestalteten Hydroblumengebinde-Einheit. Der Container ist hierbei aus einem Karton gefertigt, welcher nach dem Schnittmuster nach Fig. 4 gefaltet und geklebt wurde.

### Bezugszeichenliste:

1 Blumengebinde
2 Schutzgehäuse, Container
3 Wasserreservoir
4 Schutzfolie
5 Vorgeprägte Biegekante
6 Einschnitt / Öffnung / Klemmvorrichtung
7 Nassfließ
8 Verschluss
9 Wasserdichtes Behältnis
10 Standfläche
11 Fixierung
12 Biegelaschen
12.1 bis 12.4 Biegelaschen für den Automatikboden
12.5 bis 12.9 Biegelaschen für den Deckel
13 Klebefläche
13.1 bis 13.2 Klebefläche für den Automatikboden

## Patentansprüche

1. Blumengebindeeinheit, bestehend aus mindestens einem Blumengebinde, einem Schutzgehäuse und je Blumengebinde einem als Wasserreservoir dienenden wasserdichten Behältnis mit einem Nassfließ oder einem sonstigen, Flüssigkeit speichernden Element, wobei das bzw. die Blumengebinde jeweils von einem wasserdichten Behältnis auf der unteren Stilseite umfasst wird bzw. werden,
**dadurch gekennzeichnet,**
**dass** das oder die Blumengebinde im Wesentlichen senkrecht in dem Schutzgehäuse fixiert wird bzw. werden.

2. Blumengebindeeinheit nach Anspruch 1,
**dadurch gekennzeichnet,**
**dass** das Schutzgehäuse aus einem vorkonfektionierten Plattenelement aus Karton oder einem vergleichbaren Material aufgefaltet und/oder zusammengesteckt bzw. zusammengeklebt wird.

3. Blumengebindeeinheit nach Anspruch 1 oder 2,
**dadurch gekennzeichnet,**
**dass** die horizontale Ausdehnung des Schutzgehäuses die Form eines gleichmäßigen oder ungleichmäßigen Vielecks, eines Kreises, einer Ellipse oder eines gleichmäßigen Vielrunds hat.

4. Blumengebindeeinheit nach einem der Ansprüche von 1 bis 3,
**dadurch gekennzeichnet,**
**dass** zumindest der obere Teil der Blumengebindeeinheit, wo die Pflanzen aus dem Schutzgehäuse herausragen, in Schutzfolie eingekleidet ist und dass die Schutzfolie lichtdurchlässig oder zumindest teilweise transparent ist.

5. Blumengebindeeinheit nach einem der Ansprüche von 1 bis 4,
**dadurch gekennzeichnet,**
**dass** das Wasser in dem wasserdichten Behältnis mit dem Nassfließ oder dem sonstigen, Flüssigkeit speichernden Element selbst Nährsubstanzen, Frischhaltesubstanzen oder wassereindickende Substanzen enthält.

6. Blumengebindeeinheit nach einem der Ansprüche von 1 bis 5,
**dadurch gekennzeichnet,**
**dass** zumindest an einer Stirnseite des Schutzgehäuses ein Etikett befestigt ist bzw. eine Banderole um das Schutzgehäuse gelegt ist.

7. Vorkonfektionierte Plattenelemente aus Karton oder einem vergleichbaren Material für Schutzgehäuse für Blumengebindeeinheiten nach einem der Ansprüche 1 bis 6
**dadurch gekennzeichnet,**
**dass** die erforderlichen Biegekanten derart vorgedrückt oder vorgebogen sind, dass sie mittels Handarbeit ohne weitere Hilfsmittel zu Schutzgehäusen aufgefaltet werden können.

8. Vorkonfektionierte Plattenelemente aus Karton nach Anspruch 7
**dadurch gekennzeichnet,**
**dass** an den erforderlichen Verbindungsstellen schon abgedeckte Klebestreifen oder andere Verbindungselemente wie Klettverschlüsse angebracht sind.

9. Vorkonfektionierte Plattenelemente aus Karton nach Anspruch 7
**dadurch gekennzeichnet,**
**dass** die erforderlichen Verbindungsstellen schon verbunden sind, so dass das Plattenelement nur noch mit einem Griff aufgeklappt und ggf. fixiert werden muss.

10. Vorkonfektionierte Plattenelemente nach einem der Ansprüche 7 bis 9
**dadurch gekennzeichnet,**
**dass** ihnen bzw. ihrer Verpackungseinheit mindestens eines der folgenden Elemente beigelegt sind bzw. ist:
Banderole für das Schutzgehäuse
Etikett für das Schutzgehäuse
Wasserreservoir
Fließ für das Wasserreservoir
Bedienungsanleitung zur Erstellung der Blumengebindeeinheit
Werbeträger
Klebeband zum Verschluss des Containers
Klebeband oder Bindeeinheit zum Verschluss des Wasserreservoirs
Wirkstoffelement zur Düngung, Haltbarkeitsverbesserung oder Eindickung

11. Verfahren zur Herstellung einer Blumengebindeeinheit nach einem der Ansprüche 1 bis 6,
**dadurch gekennzeichnet,**
**dass** ein oder mehrere Blumengebinde in jeweils ein wasserdichtes und mit Wasser oder einem mit Wasser getränktem Nassfließ gefülltem Behältnis gegeben wird bzw. werden und dann von oben mit dem Bereich der Pflanzenstile in einen Schutzbehälter gesteckt wird bzw. werden.

12. Verfahren zur Herstellung einer Blumengebindeeinheit nach einem der Ansprüche 1 bis 6,
**dadurch gekennzeichnet,**
**dass** ein oder mehrere Blumengebinde in jeweils ein wasserdichtes Behältnis gegeben wird bzw. werden und dann von oben mit dem Bereich der Pflanzenstile in einen Schutzbehälter gesteckt wird bzw. werden und danach Wasser in das wasserdichte Behältnis bzw. die wasserdichten Behältnisse gegeben wird.

13. Verfahren zur Herstellung einer Blumengebindeeinheit nach einem der Ansprüche 10 und 11,
**dadurch gekennzeichnet,**
**dass** dem wasserdichten Behältnis oder dem Nassfließ oder dem sonstigen, Flüssigkeit speichernden Element ein mit Nährsubstanzen oder Frischhaltesubstanzen getränktes Element beigegeben wird oder Nährsubstanzen oder Frischhaltesubstanzen direkt beigegeben werden.
